# EUROPÄISCHE PATENTSCHRIFT

(11) **EP 3 138 711 B1**
(45) Veröffentlichungstag und Bekanntmachung des Hinweises auf die Patenterteilung: **27.03.2019**
(21) Anmeldenummer: 16180083.4
(22) Anmeldetag: 19.07.2016
(51) Int. Cl.: B60J 7/02, B60J 7/043, B60J 7/19

(54) **DACHSYSTEM FÜR EIN KRAFTFAHRZEUG**
ROOF SYSTEM FOR A MOTOR VEHICLE
SYSTEME DE TOIT DE VEHICULE AUTOMOBILE

(30) Priorität: 21.08.2015 DE 102015010796; 17.12.2015 DE 102015225811
(43) Veröffentlichungstag der Anmeldung: 08.03.2017
(73) Patentinhaber: BOS GmbH & Co. KG, 73760 Ostfildern (DE)
(72) Erfinder: Heidan, Michael, 70569 Stuttgart (DE); Marquart, Marius, 70499 Stuttgart (DE)
(74) Vertreter: Patentanwälte Ruff, Wilhelm, Beier, Dauster & Partner mbB

(56) Entgegenhaltungen:
- EP-A1- 0 543 427
- EP-A1- 0 555 977
- EP-A2- 2 450 210
- DE-U1- 29 811 016

## Beschreibung

Die Erfindung betrifft ein Dachsystem für ein Kraftfahrzeug, mit einem fahrzeugfesten Dachausschnitt sowie mit einem beweglich gelagerten Dachteil zum Verschließen und Freigeben des Dachausschnitts, sowie mit wenigstens einer Ausstell- und Führungsmechanik zur Verlagerung des Dachteils zwischen einer Schließposition und wenigstens einer Öffnungsposition, die einen Steuerschlitten aufweist, der mittels eines Antriebssystems in einer dachfesten Führungsschienenanordnung verfahrbar ist, und die einen vorderen und einen hinteren Ausstellhebel aufweist, an denen der Dachteil gelagert ist und die mit dem Steuerschlitten gekoppelt sind, wobei der vordere Ausstellhebel für eine Lüfterstellung des Dachteils relativ zu dem hinteren Ausstellhebel in Längsrichtung der Führungsschienenanordnung blockierbar ist.

Ein derartiges Dachsystem ist aus der DE 10 2012 223 709 A1 bekannt. Das bekannte Dachsystem ist für ein Fahrzeugdach eines Personenkraftwagens vorgesehen. Das Dachsystem weist einen beweglichen Dachteil auf, der - in Fahrzeuglängsrichtung gesehen - an seinen gegenüberliegenden Längsseiten mit jeweils einer Ausstell- und Führungsmechanik verbunden ist, die identisch gestaltet und synchronisiert zueinander betätigbar sind. Jede Ausstell- und Führungsmechanik weist einen vorderen und einen hinteren Ausstellhebel auf, die gelenkig mit dem Dachteil verbunden sind. Mittels der beiden Ausstell- und Führungsmechaniken in gegenüberliegenden, dachseitigen Führungsschienenanordnungen ist der Dachteil aus einer Schließstellung, in der ein Dachausschnitt zum Fahrzeuginnenraum hin verschlossen ist, in eine Lüfterstellung überführbar, in der der Dachteil schräg nach hinten und nach oben hin ausgestellt ist. Aus der Lüfterstellung kann der Dachteil in Fahrzeuglängsrichtung nach hinten in eine geöffnete Endstellung überführt werden, in der der Dachausschnitt zumindest weitgehend vollständig freigegeben ist. Dabei wird der bewegliche Dachteil über einen feststehenden Dachteil des Dachsystems hinweg nach hinten verfahren. Der hintere Ausstellhebel ist mit einem Steuerhebel gekoppelt, wohingegen der vordere Ausstellhebel mit einem von dem Steuerschlitten getrennten Führungsschlitten verbunden ist. Der Führungsschlitten und der Steuerschlitten sind in unterschiedlichen Führungsebenen innerhalb der Führungsschienenanordnung verfahrbar. Der Führungsschlitten und der Steuerschlitten sind über einen Steuerhebel zeitweise miteinander koppelbar, der abhängig von der Stellung des Führungsschlittens in einer stationären Rastaussparung der Führungsschienenanordnung blockierbar ist. Diese Blockierung des Führungsschlittens ist notwendig, um den Dachteil aus seiner Schließstellung in eine Lüfterstellung zu überführen, in der der Steuerschlitten den hinteren Ausstellhebel nach oben ausstellt, wohingegen der vordere Ausstellhebel über den Führungsschlitten in einer relativ zur Längsrichtung der Führungsschienenanordnung stationären Position gehalten wird.

Ein weiteres Dachsystem ist aus der EP 0 555 977 A1 bekannt.

Aufgabe der Erfindung ist es, ein Dachsystem der eingangs genannten Art zu schaffen, das einen gegenüber dem Stand der Technik erheblich vereinfachten Aufbau aufweist.

Diese Aufgabe wird durch den Gegenstand des Anspruchs 1 gelöst. Durch die erfindungsgemäße Lösung ist es möglich, die Blockierung des vorderen Ausstellhebels für die Lüfterstellung des Dachteils zu erzielen, ohne dass Rastelemente benötigt werden. Die Blockierung erfolgt vielmehr zwangsläufig durch die Bewegung des Steuerschlittens und die zeitweise Fixierung des Lagerzapfens des vorderen Ausstellhebels in der Aushebekulisse dadurch, dass die vordere Steuerkulisse gekreuzt zu der Aushebekulisse verläuft und so eine bewegungsabhängige Sicherung des Lagerzapfens in der Aushebekulisse ermöglicht. Die erfindungsgemäße Lösung benötigt gegenüber dem Stand der Technik eine reduzierte Anzahl von Bauteilen und demzufolge einen reduzierten Bauraum. Die erfindungsgemäße Lösung ist insbesondere vorteilhaft, wenn lediglich eine einzelne Ausstell- und Führungsmechanik im Bereich einer Fahrzeugmitte des Dachsystems vorgesehen ist, die an dem Dachteil mittig angreift. Die erfindungsgemäße Lösung ist auch besonders vorteilhaft, wenn der Dachteil eine relativ große Breite aufweist und lediglich noch ein schmaler Dachrahmenbereich an den gegenüberliegenden Seiten des Fahrzeugdachs vorhanden ist, um die dachfesten Führungsschienenanordnungen des Dachsystems unterzubringen. Erfindungsgemäß ist der vordere Ausstellhebel nicht nur in der Lüfterstellung, sondern auch in einer Schließstellung des Dachteils durch die vordere Steuerkulisse blockiert. Die vordere Steuerkulisse ist zudem derart gestaltet, dass der vordere Ausstellhebel bei Beginn einer Öffnungsbewegung aus der Schließstellung des Dachteiles heraus mit seinem vorderen Anlenkpunkt angehoben wird, wodurch zwangsläufig das Dachteil geringfügig angehoben wird. Dies ist vorteilhaft bei gekrümmter Dachvorderkante des Dachteiles, da eine Ausgleichsbewegung für diese Dachvorderkante des beweglichen Dachteiles erfolgt. Hierdurch wird verhindert, dass die Dachvorderkante zu tief nach unten abtaucht, wenn das bewegliche Dachteil aus der Schließstellung in die Lüfterstellung überführt wird.

In Ausgestaltung der Erfindung weist der Steuerschlitten wenigstens eine hintere Steuerkulisse auf, in der wenigstens ein Steuerzapfen des hinteren Ausstellhebels geführt ist. Der Steuerschlitten dient daher sowohl zur Steuerung des vorderen Ausstellhebels als auch zur Steuerung des hinteren Ausstellhebels, ohne dass weitere Schlittenbauteile benötigt werden.

In weiterer Ausgestaltung der Erfindung sind zwei hintere Steuerkulissen vorgesehen, die voneinander getrennt sind und jeweils einen Steuerzapfen des hinteren Ausstellhebels führen. Die beiden hinteren, voneinander getrennten und demzufolge geteilten Steuerkulissen dienen dazu, einen hinteren Abschnitt des Dachteils nach oben in seine Lüfterstellung auszusteuern und den Dachteil in der nach oben verlagerten Stellung zu sichern, wenn der Dachteil über einen feststehenden Teilbereich des Dachsystems hinweg nach hinten verlagert wird.

In weiterer Ausgestaltung der Erfindung sind die vordere Steuerkulisse und die beiden hinteren Steuerkulissen in einer gemeinsamen Ebene des Steuerschlittens ausgerichtet. Dadurch ist es möglich, den Steuerschlitten sehr schmal zu gestalten, wodurch auch die jeweilige Führungsschienenanordnung des Dachsystems schmal gehalten werden kann. Hierdurch ist es möglich, die nutzbare Breite des beweglichen Dachteils zu vergrößern. Dies ist insbesondere dann vorteilhaft, wenn der bewegliche Dachteil transparent gestaltet ist. Hierdurch wird im Fahrzeuginnenraum eine große Helligkeit ermöglicht.

In weiterer Ausgestaltung der Erfindung weist der Steuerschlitten ein in Hoch- und Längsrichtung der Führungsschienenanordnung ausgerichtetes Flachprofil auf, in dem die Steuerkulissen ausgebildet sind. Dieses Flachprofil ist vorzugsweise aus Metall, insbesondere aus Stahl, einstückig hergestellt. Dadurch, dass das Flachprofil in Hochrichtung ausgerichtet ist, benötigt es in Fahrzeugquerrichtung eine äußerst geringe Breite, wodurch auch die zugehörige Führungsschienenanordnung sehr schmal gestaltet werden kann. Zudem ermöglicht die geringe Breite des in Hochrichtung ausgerichteten Flachprofils eine größere Breitenerstreckung des Dachteils. In weiterer Ausgestaltung der Erfindung sind die Steuerkulissen als längserstreckte Durchtrittsschlitze gestaltet, die abhängig von einer vorgegebenen Steuerbahn des Lagerzapfens des vorderen Ausstellhebels oder des entsprechenden Steuerzapfens des hinteren Ausstellhebels in der Ebene des Steuerschlittens eben, ansteigend oder abfallend verlaufen. Die Durchtrittsschlitze bilden demzufolge entsprechende Kulissenbahnen, in denen der Lagerzapfen bzw. die Steuerzapfen geführt sind.

Erfindungsgemäß weist die Aushebekulisse einen zumindest weitgehend in Hochrichtung erstreckten Blockierabschnitt auf, der derart gekreuzt zu der vorderen Steuerkulisse verläuft, dass der Lagerzapfen des vorderen Ausstellhebels in dem Blockierabschnitt der Aushebekulisse durch die Steuerkulisse gestützt gehalten ist, solange der Dachteil sich in seiner Lüfterstellung befindet. Der Blockierabschnitt stellt einen in Hochrichtung ausgerichteten Abschnitt einer Kulissenbahn der Aushebekulisse dar. Der Blockierabschnitt kann lediglich teilweise in Hochrichtung ausgerichtet sein und demzufolge auch Komponenten in Längsrichtung der Führungsschienenanordnung und damit in Längsrichtung des Kraftfahrzeugs aufweisen. Maßgeblich ist lediglich, dass relativ zu der vorderen Steuerkulisse eine Kreuzung erfolgt, die das bewegungsabhängige Blockieren des Lagerzapfens des vorderen Ausstellhebels in der Aushebekulisse ermöglicht.

In weiterer Ausgestaltung der Erfindung sind die Durchtrittsschlitze der beiden hinteren Steuerkulissen mit in Querrichtung erstreckten Laufflächenverbreiterungen versehen, die eine verbreiterte Auflagefläche für die Steuerzapfen zur Verfügung stellen. Vorzugsweise sind die Laufflächenverbreiterungen durch Kunststoffumspritzungen der Randbereiche der Durchtrittsschlitze erzielt. Neben der in Querrichtung des Steuerschlittens verbreiterten Auflagefläche für die Steuerzapfen ergibt sich auch eine verbesserte Abstützung in Querrichtung. Die Kunststoffumspritzung besteht vorzugsweise aus Polyoxymethylen (POM).

In weiterer Ausgestaltung der Erfindung sind die Laufflächenverbreiterungen mit einer Gleitschicht wie insbesondere einer Kunststoffbeschichtung versehen. Die Kunststoffbeschichtung kann in Form der zuvor beschriebenen Kunststoffumspritzung realisiert sein.

In weiterer Ausgestaltung der Erfindung sind die Steuerzapfen im Bereich ihrer von dem hinteren Ausstellhebel abgewandten Stirnseiten mit jeweils einem Gleitkopf versehen, deren Durchmesser größer sind als eine entsprechende Breite des jeweiligen Durchtrittsschlitzes der hinteren Steuerkulissen. Die Gleitköpfe der Steuerzapfen stützen sich seitlich an dem Flachprofil des Steuerschlittens im Bereich der seitlichen Stützflächen der Laufflächenverbreiterungen ab und gewährleisten, dass die Steuerzapfen nicht aus den Durchtrittsschlitzen in Querrichtung herausgleiten können. Unter der Querrichtung ist jeweils die Richtung quer zur Längsrichtung der Führungsschienenanordnungen, nämlich die Fahrzeugquerrichtung, zu verstehen. In gleicher Weise ist unter der Hochrichtung die Fahrzeughochrichtung und unter der Längsrichtung die Fahrzeuglängsrichtung zu verstehen. Die verschiedenen Richtungen sind jeweils auf den im Kraftfahrzeug eingebauten, fertigen Betriebszustand des Dachsystems gesehen.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch eine Ausführungsform eines erfindungsgemäßen Dachsystems im Bereich eines Fahrzeugdachs eines Personenkraftwagens,
- Fig. 2: das Dachsystem nach Fig. 1 mit einem in eine geöffnete Endstellung überführten beweglichen Dachteil,
- Fig. 3: in einer perspektivischen Explosionsdarstellung eine linke Führungsschienenanordnung mit einer linken Ausstell- und Führungsmechanik - auf eine normale Fahrtrichtung des Personenkraftwagens bezogen -,
- Fig. 4: in vergrößerter Explosionsdarstellung einen Ausschnitt der Darstellung nach Fig. 3,
- Fig. 5: in perspektivischer Darstellung einen Frontabschnitt der Führungsschienenanordnung gemäß Fig. 3,
- Fig. 6: in perspektivischer Explosionsdarstellung einen Führungsschlitten der Ausstell- und Führungsmechanik nach Fig. 3,
- Fig. 7: in einer Explosionsdarstellung einen hinteren Teilbereich der Ausstell- und Führungsmechanik gemäß Fig. 3,
- Fig. 8: die Ausstell- und Führungsmechanik in der Führungsschienenanordnung in einer Schließstellung des Dachteils,
- Fig. 9: die Ausstell- und Führungsmechanik gemäß Fig. 8 in anderer perspektivischer Darstellung,
- Fig. 10: die Ausstell- und Führungsmechanik gemäß Fig. 8 in einer Lüfterstellung,
- Fig. 11: die Lüfterstellung der Ausstell- und Führungsmechanik nach Fig. 10 in anderer perspektivischer Darstellung,
- Fig. 12: eine ausgefahrene Öffnungsstellung der Ausstell- und Führungsmechanik gemäß den Fig. 8 bis 11 und
- Fig. 13: die Öffnungsstellung gemäß Fig. 12 in anderer perspektivischer Darstellung.

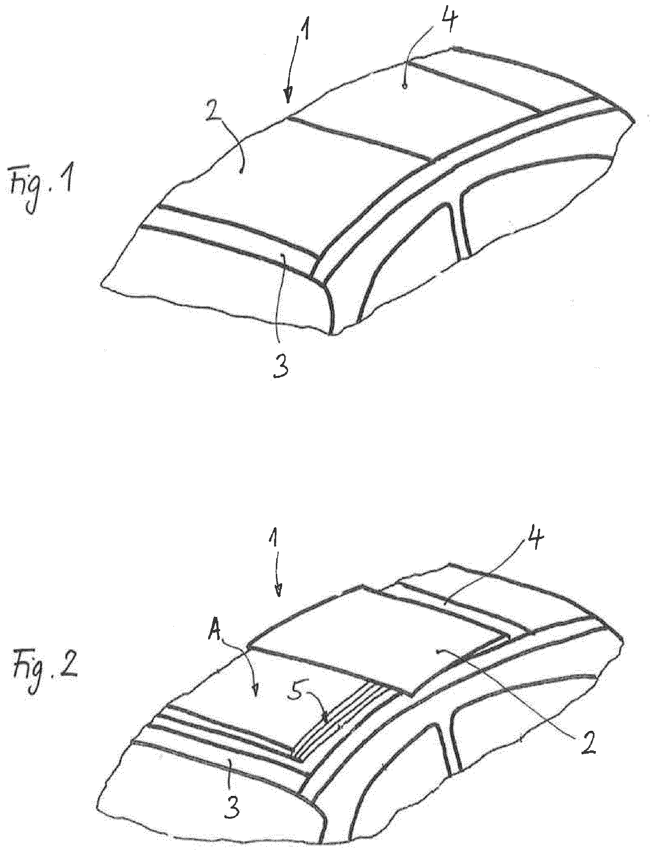

Ein Personenkraftwagen weist gemäß den Fig. 1 und 2 ein Fahrzeugdach auf, das mit einem Dachsystem 1 versehen ist. Das Dachsystem 1 wird im Bereich des Fahrzeugdachs montiert. Hierzu ist das Fahrzeugdach großflächig ausgeschnitten. Das Dachsystem 1 wird in den ausgeschnittenen Bereich eingesetzt und in geeigneter Weise mit der Dachtragstruktur und der Karosserietragstruktur des Personenkraftwagens dicht verbunden.

Das Dachsystem 1 weist frontseitig eine unmittelbar benachbart zu einem Windschutzscheibenrahmen des Personenkraftwagens angeordnete Frontblende 3 auf. An die Frontblende 3 schließt nach hinten ein beweglicher Dachteil 2 an, der in seiner Schließstellung gemäß Fig. 1 einen Dachausschnitt A verschließt, der einen Zugang zu einem Fahrzeuginnenraum des Personenkraftwagens bildet. An den beweglichen Dachteil 2 und damit an den Dachausschnitt A schließt nach hinten zu einem Fahrzeugheck hin ein stationärer Dachbereich 4 an, der fest mit einem Tragrahmenmodul des Dachsystems 1 verbunden ist und demzufolge zu dem Fahrzeugdach stationär angeordnet ist. In der Schließstellung des beweglichen Dachteils 2 bilden die Frontblende 3, eine Oberfläche des Dachteils 2 sowie eine Oberfläche des Dachbereichs 4 eine im Wesentlichen bündig aneinanderschließende Außenhaut für das Fahrzeugdach.

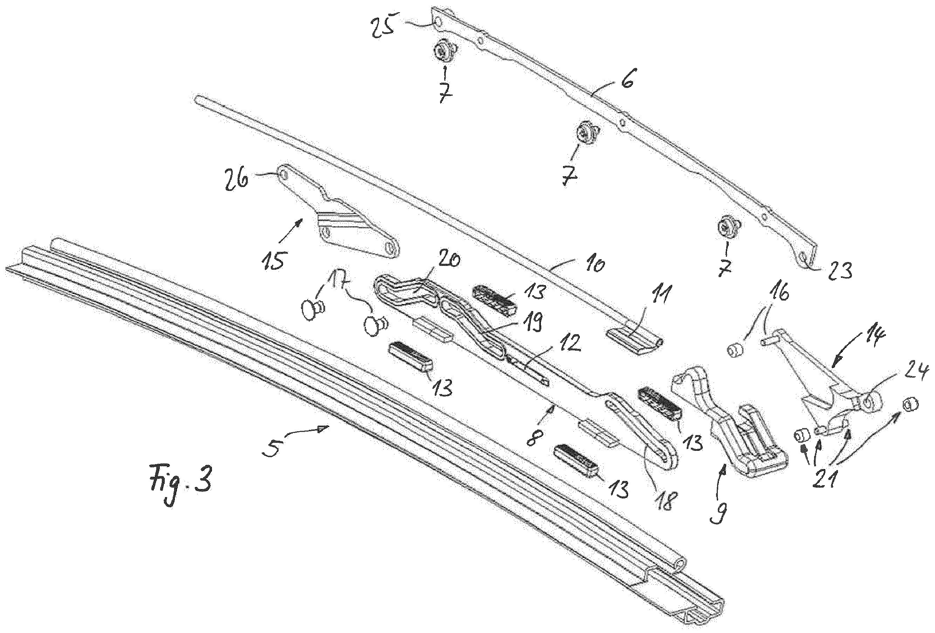

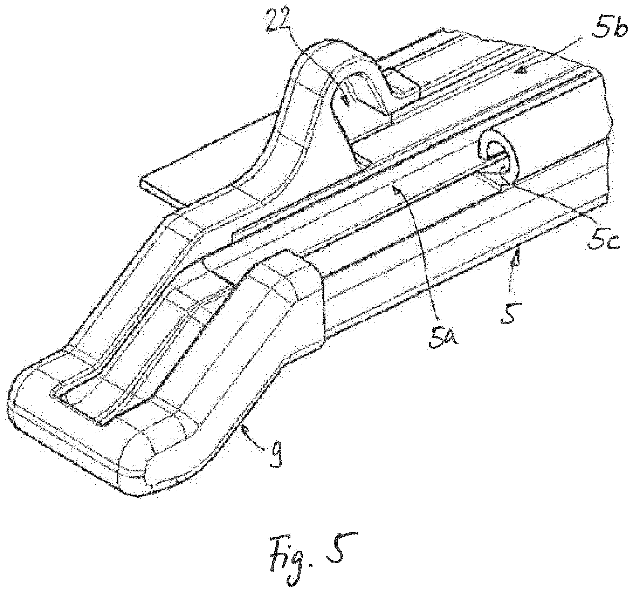

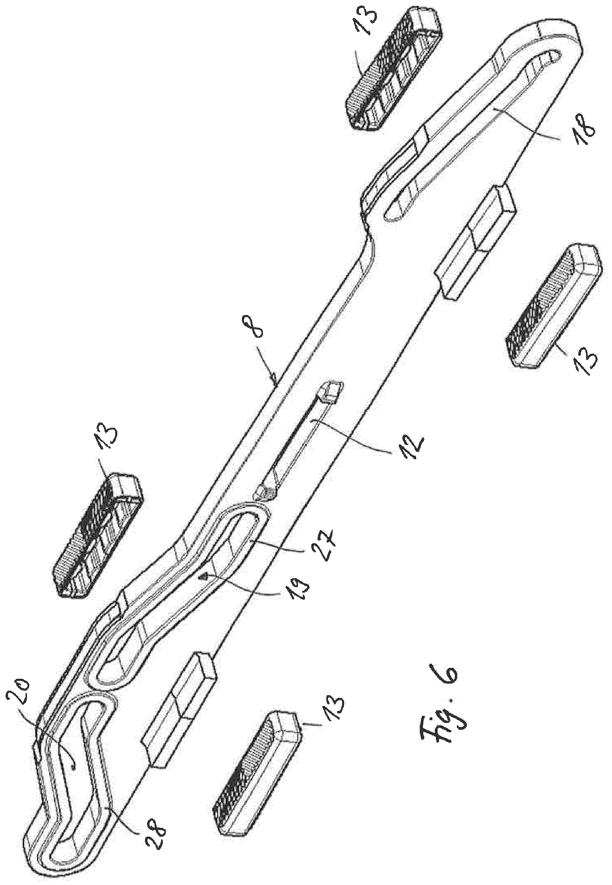

Das Tragrahmenmodul des Dachsystems 1 weist an zwei gegenüberliegenden Längsseiten des Dachausschnitts A zwei Führungsschienenanordnungen 5 auf, die zumindest weitgehend über eine gesamte Länge des Dachsystems 1 erstreckt sind und sich auch längs des feststehenden Dachbereichs 4 erstrecken. Die beiden Führungsschienenanordnungen 5 dienen zur Führung des Dachteils 2 aus der Schließstellung gemäß Fig. 1 bis in die geöffnete Endstellung gemäß Fig. 2. Die gegenüberliegenden Führungsschienenanordnungen 5, von denen in Fig. 2 lediglich die in Fahrtrichtung linke Führungsschienenanordnung 5 gezeigt ist, sind spiegelsymmetrisch zu einer vertikalen Fahrzeugmittellängsebene, im Übrigen jedoch identisch zueinander gestaltet. Zur Verlagerung des Dachteils 2 zwischen der Schließstellung und der geöffneten Endstellung ist jeder Führungsschienenanordnung 5 eine nachfolgend näher beschriebene Ausstell- und Führungsmechanik zugeordnet, wobei anhand der Fig. 3 bis 13 lediglich die in Fahrtrichtung linke Ausstell- und Führungsmechanik näher beschrieben ist. Die gegenüberliegende Ausstell- und Führungsmechanik ist spiegelsymmetrisch, im Übrigen jedoch identisch zu der dargestellten Ausstell- und Führungsmechanik ausgeführt. Die beiden Ausstell- und Führungsmechaniken werden mittels eines Antriebssystems angetrieben, das einen zentralen Elektromotor sowie zwei flexible Antriebsübertragungskabel aufweist, die mittels eines geeigneten Getriebes synchronisiert zueinander von dem Elektromotor angetrieben sind. Das in der linken Führungsschienenanordnung 5 verlegte Antriebsübertragungskabel 10 ist anhand der Fig. 3 und 12, 13 ansatzweise dargestellt. Die Antriebsübertragungskabel werden auch als Flexwellen bezeichnet und weisen einen wendelförmigen Außenmantel auf, der im Bereich des Getriebes durch eine geeignete Gewindeschnecke beaufschlagt wird, um eine Längsverlagerung innerhalb der jeweiligen Führungsschienenanordnung 5 zu bewirken. Zur Führung des Antriebsübertragungskabels 10 weist jede Führungsschienenanordnung 5 ein zur Dachmitte hin offenes Führungsprofil 5c auf (siehe insbesondere Fig. 5).

Die Führungsschienenanordnung 5 weist zwei übereinander angeordnete Führungsebenen auf, die durch entsprechende Schienenprofilierungen gebildet sind. In einer unteren Führungsebene 5a (Fig. 5) ist ein Steuerschlitten 8 der Ausstell- und Führungsmechanik längsverschiebbar geführt. In einer parallel oberhalb der Führungsebene 5a verlaufenden oberen Führungsebene 5b ist ein Lagerzapfen 16 eines vorderen Ausstellhebels 14 der Ausstell- und Führungsmechanik geführt. Die Führungsschienenanordnung 5 weist an ihrem vorderen Stirnendbereich einen Führungsfortsatz 9 auf, der einen gekrümmten Führungsabschnitt definiert. Der Führungsfortsatz 9 schließt an die untere Führungsebene 5a an und verlagert das Niveau der unteren Führungsebene nach vorne hin schräg nach unten. An dem Führungsfortsatz 9 ist zudem einstückig eine Aushebekulisse 22 angeformt, die nachfolgend näher beschrieben wird und der oberen Führungsebene 5b zugeordnet ist.

Der Dachteil 2 ist oberhalb jeder Führungsschienenanordnung 5 mit jeweils einer formstabilen Tragstrebe 6 mithilfe von Schraubverbindungen 7 fest verbunden. Die jeweilige Tragstrebe 6 ist jeweils einer Ausstell- und Führungsmechanik zugeordnet. Die in Fig. 3 dargestellte linke Tragstrebe 6 ist demzufolge der linken Ausstell- -und Führungsmechanik zugeordnet. Die Tragstrebe 6 erstreckt sich in Längsrichtung des Dachteils 2 und zumindest weitgehend über eine gesamte Länge des Dachteils 2. Die Tragstrebe 6 ist an ihrem vorderen Stirnendbereich mittels eines Lagerpunkts 23 mit einem Gelenk 24 eines vorderen Ausstellhebels 14 und im Bereich ihres hinteren Stirnendbereichs mittels eines Lagerpunkts 25 mit einem Gelenk eines Auslegerarms eines hinteren Ausstellhebels 15 schwenkbeweglich verbunden. Die beiden durch die Lagerpunkte 23 und 25 erstreckten Schwenkachsen erstrecken sich in Fahrzeugquerrichtung und damit quer zu der im Wesentlichen in Fahrzeuglängsrichtung erstreckten Führungsschienenanordnung 5. Der vordere Ausstellhebel 14 ist in die Ausstell- und Führungsmechanik über drei nach Art eines Dreiecks voneinander beabstandete Gelenkachsen eingebunden. Neben dem Gelenk 24 definiert ein nachfolgend näher beschriebener Lagerzapfen 16 eine weitere Gelenkachse und ein Führungszapfen 21 eine dritte Gelenkachse. Der Führungszapfen 21 dient zur Führung des Ausstellhebels 14 in der Führungsebene 5a der Führungsschienenanordnung 5 sowie in dem an die Führungsebene 5a frontseitig anschließenden Führungsfortsatz 9. Der Lagerzapfen 16 ragt zur Fahrzeugmitte hin von einem Auslegerarm des Ausstellhebels 14 nach innen ab und ist in der Aushebekulisse 22 sowie in der oberen Führungsebene 5b geführt. Sowohl der Lagerzapfen 16 als auch der Führungszapfen 21 weisen nicht näher bezeichnete Gleitköpfe auf, die eine sichere und spielarme Gleitbewegung in den entsprechenden Führungsebenen 5a, 5b ermöglichen.

Der hintere Ausstellhebel 15 weist ebenfalls drei Gelenkachsen auf, die parallel zueinander in Fahrzeugquerrichtung erstreckt sind und nach Art eines Dreiecks voneinander beabstandet sind. Neben dem Gelenk 26 werden die drei Gelenkachsen durch zwei Stützzapfen 17 definiert, die den Ausstellhebel 15 durchdringen und die in zwei nachfolgend näher beschriebenen, hinteren Steuerkulissen 19, 20 des Steuerschlittens 8 geführt sind.

Der Steuerschlitten 8 ist als ebenes Flachprofil gestaltet, das hochkant ausgerichtet ist und demzufolge in Hochrichtung sowie in Längsrichtung der Führungsschienenanordnung 5 erstreckt ist. Das Flachprofil ist platten- oder leistenförmig aus Metall, vorliegend aus Stahl, hergestellt und einstückig ausgeführt. Das Flachprofil weist in Längsrichtung voneinander beabstandet auf seinen gegenüberliegenden Längsseiten jeweils zwei seitlich abragende Tragabschnitte auf, die nicht näher bezeichnet sind und die jeweils einen Gleitkörper 13 tragen. Der jeweilige Gleitkörper 13 ist aus einem geeigneten Kunststoffmaterial gestaltet und dient dazu, eine reibungsarme Gleitführung für den Steuerschlitten 8 in der Führungsebene 5a der Führungsschienenanordnung 5 zu ermöglichen. Zur Verlagerung des Steuerschlittens 8 in der Führungsschienenanordnung 5 weist der Steuerschlitten 8 mittig eine Aufnahme 12 auf, in der ein Kupplungsabschnitt 11 des Antriebsübertragungskabels 10 formschlüssig gesichert ist. Eine Verlagerung des Antriebsübertragungskabels 10 bewirkt demzufolge zwangsläufig eine entsprechende Verschiebung des Steuerschlittens 8 in der Führungsebene 5a der Führungsschienenanordnung 5. Sowohl der Steuerschlitten 8 als auch der Führungszapfen 21 des vorderen Ausstellhebels 14 sind demzufolge längs der unteren Führungsebene 5a verlagerbar. Der Führungszapfen 21 des vorderen Ausstellhebels 14 kann zudem in die schräge und gekrümmte frontseitige Führungsebene des Führungsfortsatzes 9 eintauchen, die fluchtend in die Führungsebene 5a nach hinten übergeht. Die hinteren Steuerkulissen 19, 20 wie auch eine vordere Steuerkulisse 18 sind als Durchtrittsschlitze in dem Flachprofil des Steuerschlittens 8 ausgebildet.

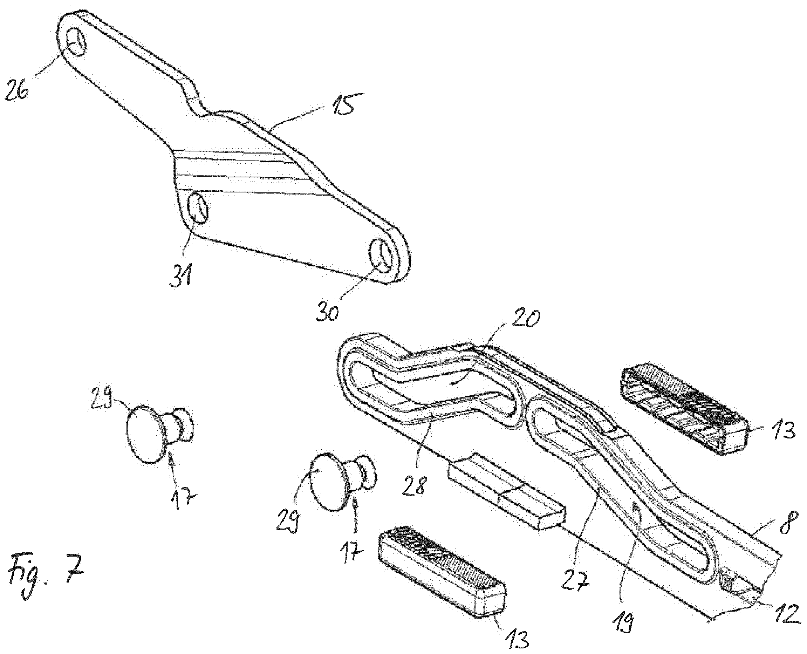

Der Lagerzapfen 16 des vorderen Ausstellhebels 14 durchdringt die vordere Steuerkulisse 18 des Steuerschlittens 8 und ragt gegenüberliegend zu dem Auslegerarm des vorderen Ausstellhebels 14 in die Aushebekulisse 22 hinein. Die vordere Steuerkulisse 18 ist in einem vorderen Abschnitt des Steuerschlittens 8 vorgesehen. Sowohl die vordere Steuerkulisse 18 als auch die beiden hinteren Steuerkulissen 19 und 20 sind in der in Hochrichtung sowie in Längsrichtung ausgerichteten Ebene des Flachprofils des Steuerschlittens 8 angeordnet. Die vordere Steuerkulisse 18 steigt von vorne ausgehend im Wesentlichen stetig schräg nach hinten und oben an. Die beiden hinteren Steuerkulissen 19 und 20 sind mit geringem Abstand voneinander getrennt. Sowohl die vordere Steuerkulisse 18 als auch die hinteren Steuerkulissen 19, 20 werden durch Durchtrittsschlitze gebildet, die in dem Flachprofil des Steuerschlittens 8 vorgesehen sind und zu beiden Längsseiten des Steuerschlittens 8 hin offen sind. Die vordere der beiden hinteren Steuerkulissen 19, 20 weist von vorne gesehen einen ebenen Kulissenbahnabschnitt auf, an den sich ein schräg nach oben ansteigender Kulissenabschnitt anschließt, der in einen weiteren, horizontal nach hinten erstreckten Endabschnitt übergeht, dessen Niveau gegenüber dem vorderen Frontabschnitt nach oben versetzt ist. Entsprechend umgekehrt weist die hintere der beiden hinteren Steuerkulissen 20 einen frontseitigen Kulissenabschnitt auf, der auf Höhe des endseitigen Kulissenabschnitts der ersten hinteren Steuerkulisse 19 beginnt und sich horizontal nach hinten erstreckt. An diesen frontseitigen Abschnitt der zweiten hinteren Steuerkulisse 20 schließt ein schräg nach hinten und nach unten abfallender Kulissenabschnitt an, der in einen unteren, hinteren endseitigen Kulissenabschnitt der zweiten hinteren Steuerkulisse 20 mündet. Dieser endseitige hintere Kulissenabschnitt ist wieder horizontal erstreckt, allerdings auf einem Höhenniveau unterhalb des frontseitigen Kulissenabschnitts der ersten hinteren Steuerkulisse 19, wie Fig. 7 entnehmbar ist. Der Ausstellhebel 15 ist in den beiden hinteren Steuerkulissen 19, 20 verschiebbar geführt. Hierzu durchdringt der vordere Steuerzapfen 17 die erste hintere Steuerkulisse 19 und ist an einem vorderen Gelenkpunkt 30 mit dem Ausstellhebel 15 verbunden. Der hintere Steuerzapfen 17 durchdringt die zweite hintere Steuerkulisse 20 und ist mit einem hinteren Gelenkpunkt 31 mit dem Ausstellhebel 15 verbunden. Die Steuerzapfen 17 sind derart gestaltet, dass sie gleitbewegliche Kulissensteine in den hinteren Steuerkulissen 19, 20 bilden. Um zu vermeiden, dass die Steuerzapfen 17 auf der Seite des Ausstellhebels 15 aus den Steuerkulissen 19, 20 herausgleiten können, ist jeder Steuerzapfen 17 auf seiner von dem Ausstellhebel 15 abliegenden Stirnseite mit einem Gleitkopf 29 versehen, dessen Durchmesser größer ist als eine Höhe des jeweiligen Durchtrittsschlitzes der jeweiligen hinteren Steuerkulisse 19, 20.

Die beiden hinteren Steuerkulissen 19, 20 weisen Laufflächenverbreiterungen 27, 28 auf, die als Gleitschichten der umlaufenden Randbereiche der beiden Durchtrittsschlitze der hinteren Steuerkulissen 19, 20 ausgeführt sind. Die Laufflächenverbreiterungen 27, 28 erstrecken sich zu den gegenüberliegenden Längsseiten des Flachprofils des Steuerschlittels 8 seitlich abragend hinaus, wodurch entsprechende Auflageflächen für die Steuerzapfen 17 vergrößert werden. Die Laufflächenverbreiterungen 27 werden durch Kunststoffumspritzungen der Durchtrittsschlitze in dem Flachprofil erzielt. Als geeigneter Kunststoff wird POM eingesetzt.

Wie insbesondere anhand der Fig. 5 erkennbar ist, weist die Aushebekulisse 22 einen in Hochrichtung sowie geringfügig schräg nach vorne erstreckten Blockierabschnitt auf, in dem der Lagerzapfen 16 in einer Ausgangsstellung gefangen ist. Der Blockierabschnitt ist nach unten zu dem die obere Führungsebene 5b bildenden Schienenprofil der Führungsschienenanordnung 5 hin offen. Der Führungszapfen 21 des vorderen Ausstellhebels 14 ist in dieser Ausgangslage am vorderen Endbereich der Kulissenbahn des Führungsfortsatzes 9 positioniert. Der Steuerschlitten 8 befindet sich in seiner vorderen Endstellung, in der der Lagerzapfen 16 an einem hinteren Endbereich der vorderen Steuerkulisse 18 anliegt. In dieser Ausgangslage befindet sich der bewegliche Dachteil 2 in seiner Schließstellung gemäß Fig. 1.

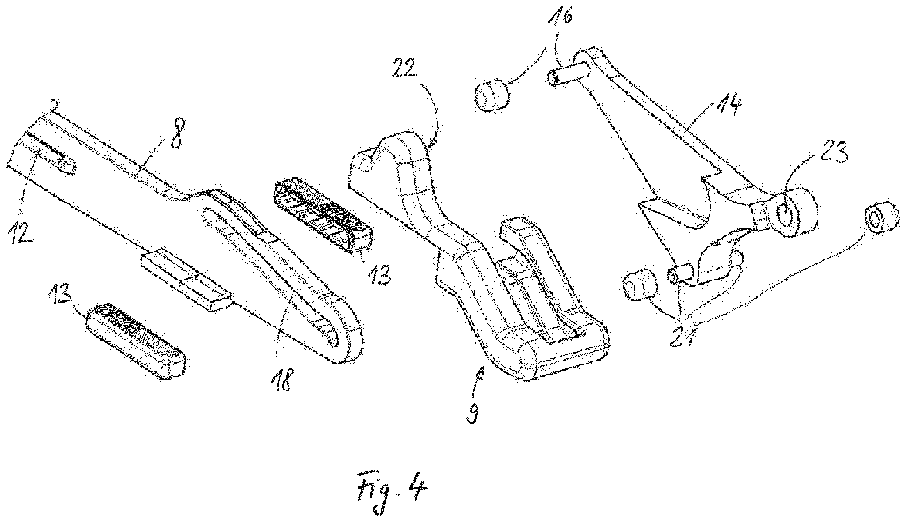

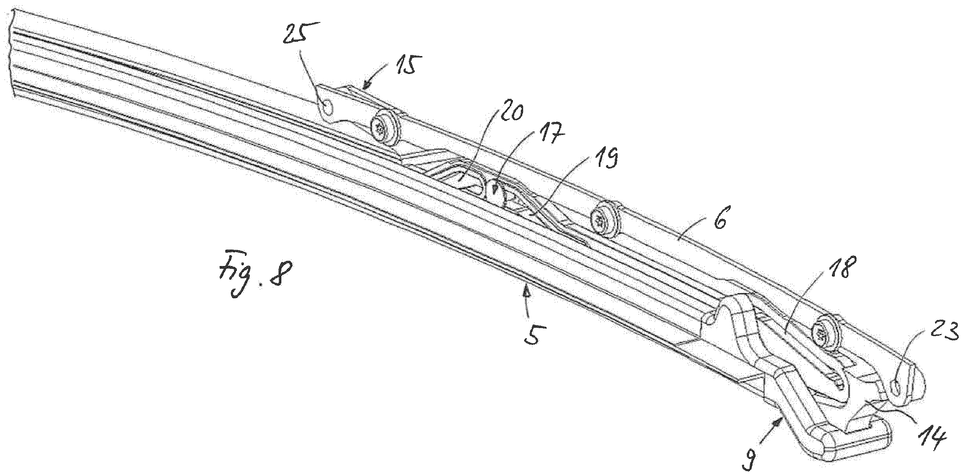

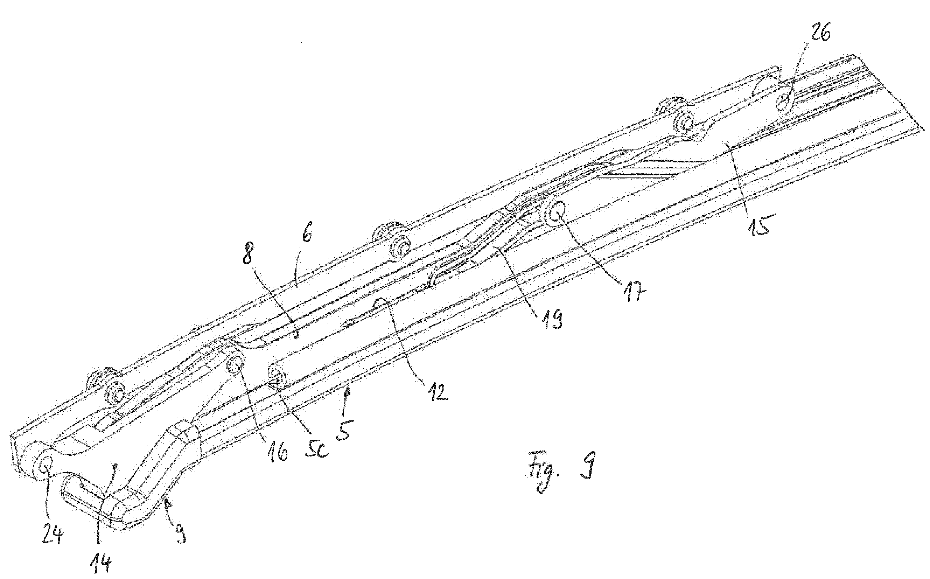

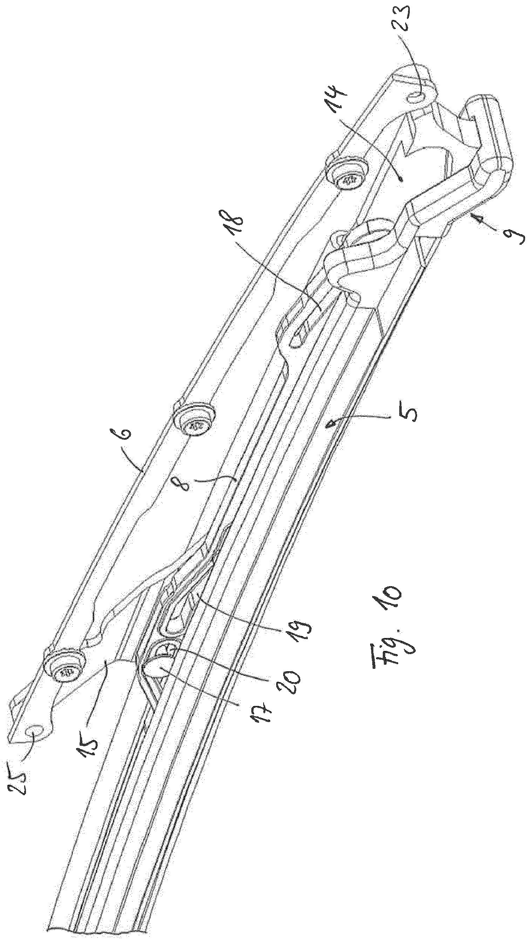

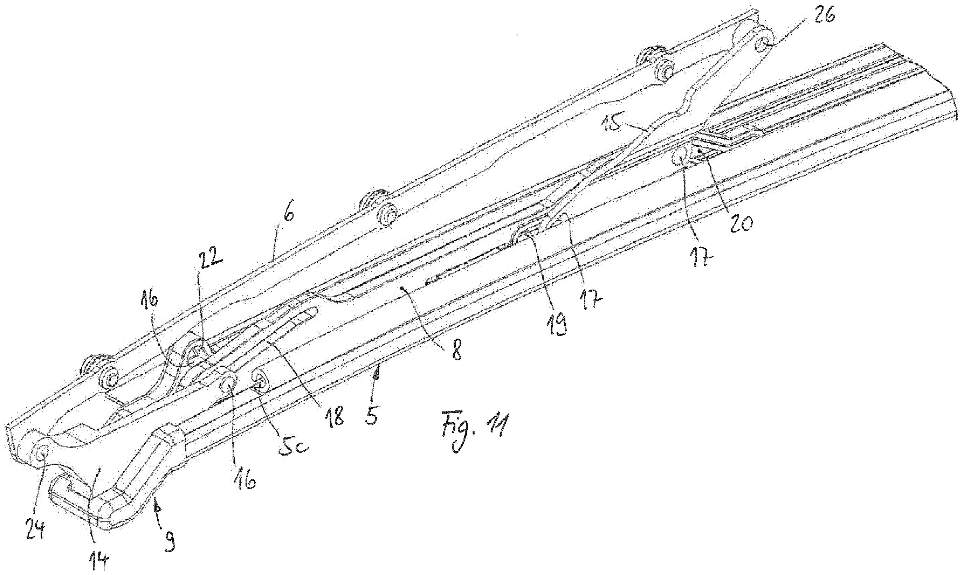

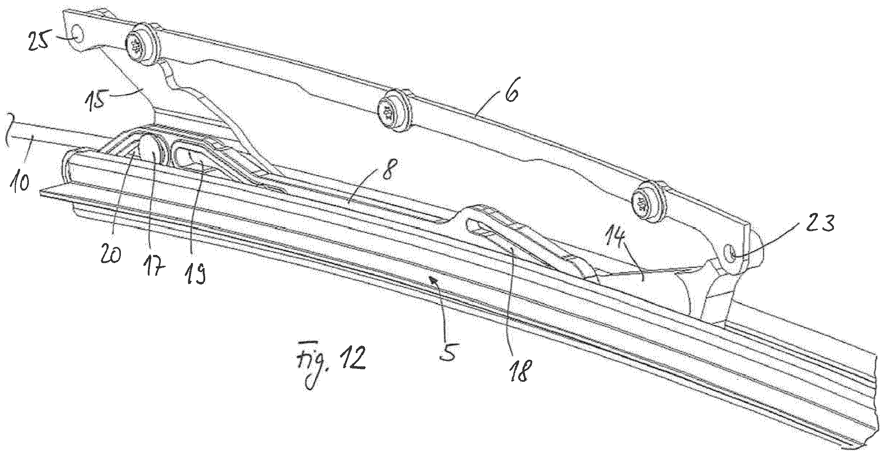

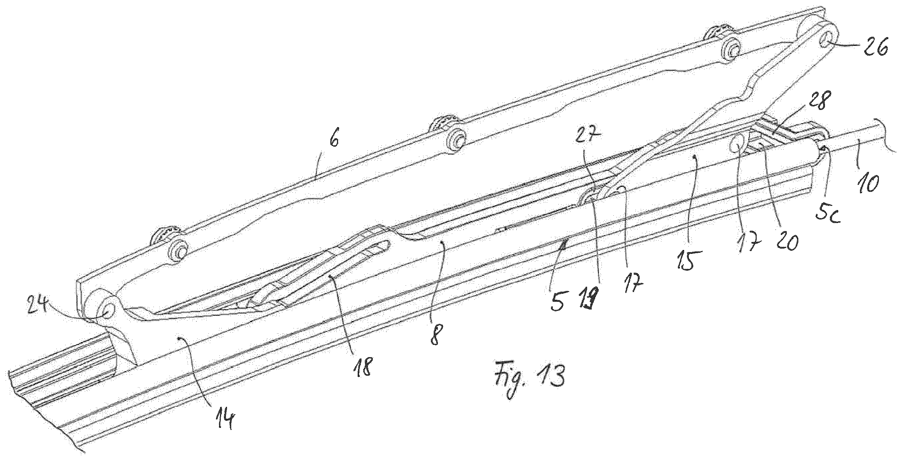

Um nun den Dachteil 2 aus der Schließstellung in eine Lüfterstellung zu überführen, in der ein hinterer Randbereich des beweglichen Dachteils 2 schräg nach oben ausgestellt ist und die Oberfläche des feststehenden Dachbereichs 4 überragt, wird der Steuerschlitten 8 mittels des Antriebsübertragungskabels 10 nach hinten verfahren. Da der vordere Ausstellhebel 14 über die Tragstrebe 6 mit dem hinteren Ausstellhebel 15 verbunden ist, fährt das Flachprofil des Steuerschlittens 8 an dem Ausstellhebel 15 entlang, wodurch die Steuerzapfen 17 in den beiden hinteren Steuerkulissen 19, 20 aus den hinteren Endabschnitten der beiden hinteren Steuerkulissen 19, 20 heraus in den beiden hinteren Steuerkulissen 19, 20 zwangsläufig nach vorne verlagert werden. Dadurch wird der Ausstellhebel 15 zwangsläufig angehoben, da der hintere Steuerzapfen 17 in der zweiten hinteren Steuerkulisse 20 zwangsläufig angehoben und der vordere Steuerzapfen 17 in der ersten hinteren Steuerkulisse 19 entsprechend gegenläufig zwangsläufig abgesenkt wird. Das Verfahren des Steuerschlittens 8 nach hinten bewirkt auch zwangsläufig eine Verlagerung der vorderen Steuerkulisse 18 relativ zu dem in der Aushebekulisse 22 gefangenen Lagerzapfen 16. Die vordere Steuerkulisse 18 ist derart schräg und gekrümmt ausgerichtet über ihre Länge, dass zu Beginn der Verlagerungsbewegung des Steuerschlittens 8 der vordere Ausstellhebel 14 im Bereich seines hinteren Lagerzapfens 16 abgesenkt wird, wodurch zwangsläufig der vordere Lagerpunkt 23 des Dachteils 2 und das vordere Gelenk 24 des Ausstellhebels 14 angehoben werden. Hierdurch ergibt sich eine Ausgleichsbewegung einer Dachvorderkante des beweglichen Dachteils 2, die insbesondere vorteilhaft ist bei einer gewölbten Gestaltung der Dachvorderkante und bei Gestaltung des Dachteiles 2 als Glasdeckel. Da die vordere Steuerkulisse 18, wie anhand der Fig. 4 erkennbar ist, nach vorne abfällt, wird bei einer Verlagerung des Steuerschlittens 8 nach hinten zwangsläufig der Lagerzapfen 16 allmählich in dem Blockierabschnitt der Aushebekulisse 22 nach unten verlagert. Der Lagerzapfen 16 bleibt in dem Blockierabschnitt der Aushebekulisse jedoch noch solange gefangen, bis der Ausstellhebel 15 seine Lüfterstellung erreicht hat, in der der hintere Randbereich des beweglichen Dachteils 2 schräg nach oben ausgestellt ist. Bei einer weiteren Verlagerung des Steuerschlittens 8 nach hinten zwingt die schräge Ausrichtung der vorderen Steuerkulisse 18 den Lagerzapfen 16 zwangsläufig in der Aushebekulisse 22 weiter nach unten, bis der Lagerzapfen 16 auf der Führungsebene 5b auftrifft. Nun kann der Lagerzapfen 16 durch den Steuerschlitten 8 weiter mitgenommen werden, wodurch zwangsläufig auch der Führungszapfen 21 des vorderen Ausstellhebels 14 aus dem Führungsfortsatz 9 heraus nach hinten verlagert wird. Dadurch wird zwangsläufig der Gelenkpunkt 23 der Tragstrebe 6 nach oben verlagert, wodurch die Tragstrebe 6 gemeinsam mit dem beweglichen Dachteil 2 nicht nur hinten, sondern auch vorne nach oben ausgestellt wird. Die Tragstrebe 6 ist nun so weit nach oben ausgestellt (siehe Fig. 12 und 13), dass der Steuerschlitten 8 die beiden Ausstellhebel 14 und 15 gemeinsam mit der Tragstrebe 6 nach hinten verlagern kann. Demzufolge wird der Dachteil 2 nach hinten über den feststehenden Dachbereich 4 verschoben bis hin zu der geöffneten Endstellung, die anhand der Fig. 2 erkennbar ist. Die Lüfterstellung des beweglichen Dachteils und damit der entsprechenden Tragstrebe 6 ist anhand der Fig. 10 und 11 gezeigt. Die geschlossene Endstellung, d.h. die Schließstellung des Dachteils 2, hingegen ist anhand der Fig. 8 und 9 erkennbar, da dort die jeweilige Tragstrebe 6 in der unteren Endstellung gezeigt ist, die der Schließstellung des Dachteils 2 entspricht.

Ein entsprechend umgekehrter Schließvorgang aus der geöffneten Endstellung erfolgt durch einfaches Verfahren des Antriebsübertragungskabels 10 nach vorne, wodurch zwangsläufig der Steuerschlitten 8 wieder nach vorne verfahren wird, wodurch die zuvor beschriebenen Bewegungen der Ausstell- und Führungsmechanik in umgekehrter Weise erfolgen.

## Patentansprüche

1. Dachsystem für ein Kraftfahrzeug, mit einem fahrzeugfesten Dachausschnitt (A) sowie mit einem beweglich gelagerten Dachteil (2) zum Verschließen und Freigeben des Dachausschnitts (A), sowie mit wenigstens einer Ausstell- und Führungsmechanik zur Verlagerung des Dachteils (2) zwischen einer Schließposition und wenigstens einer Öffnungsposition, die einen Steuerschlitten (8) aufweist, der mittels eines Antriebssystems in einer dachfesten Führungsschienenanordnung (5) verfahrbar ist, und die einen vorderen und einen hinteren Ausstellhebel (14, 15) aufweist, an denen der Dachteil (2) gelagert ist und die mit dem Steuerschlitten (8) gekoppelt sind, wobei der vordere Ausstellhebel (14) für eine Lüfterstellung des Dachteils (2) relativ zu dem hinteren Ausstellhebel (15) in Längsrichtung der Führungsschienenanordnung (5) blockierbar ist, wobei der Steuerschlitten (8) eine vordere Steuerkulisse (18) aufweist, in der ein Lagerzapfen (16) des vorderen Ausstellhebels (14) geführt ist, wobei der Lagerzapfen (16) durch die vordere Steuerkulisse (18) hindurch in eine dachfeste Aushebekulisse (22) hineinragt, die in einer parallelen Ebene zu der vorderen Steuerkulisse (18) verläuft und zumindest abschnittsweise gekreuzt zu der vorderen Steuerkulisse (18) ausgerichtet ist, **dadurch gekennzeichnet, dass** die Aushebekulisse (22) an einem Führungsfortsatz (9) einstückig angeformt ist, der einen gekrümmten Führungsabschnitt definiert und an einem vorderen Stirnendbereich der Führungsschienenanordnung (5) vorgesehen ist, und dass die Aushebekulisse (22) einen zumindest weitgehend in Hochrichtung erstreckten Blockierabschnitt aufweist, der derart gekreuzt zu der vorderen Steuerkulisse (18) verläuft, dass der Lagerzapfen (16) des vorderen Ausstellhebels (14) in dem Blockierabschnitt der Aushebekulisse (22) durch die Steuerkulisse (18) gestützt gehalten ist, solange der Dachteil in seine Lüfterstellung überführt wird.

## Claims

1. Roof system for an automotive vehicle, with a roof opening (A) fixed to the vehicle and with a movably mounted roof part (2) for closing and exposing the roof opening (A), and with at least one deployment and guide mechanism for displacing the roof part (2) between a closed position and at least one open position, said mechanism including a control carriage (8) which is movable by means of a drive system in a guide track arrangement (5) fixed to the roof, and said mechanism including a front and a rear deployment lever (14, 15) with the roof part (2) mounted thereon, and said levers are coupled to the control carriage (8), wherein the front deployment lever (14) is capable of being blocked relative to the rear deployment lever (15) in the longitudinal direction of the guide track arrangement (5) for a ventilation position of the roof part (2), wherein the control carriage (8) has a front control slotted link (18) in which a bearing pin (16) of the front deployment lever (14) is guided, wherein the bearing pin (16) projects through the front control slotted link (18) into a lifting slotted link (22) fixed to the roof, which link (22) extends in a parallel plane to the front control slotted link (18) and is oriented at least in sections crosswise in relation to the front control slotted link (18),
**characterized in that**
the lifting slotted link (22) is integrally molded to a guide extension (9) which defines a curved guiding section and is provided in a front face end region of the guide track arrangement (5), and **in that** the lifting slotted link (22) includes a blocking section which extends at least largely in the vertical direction, and which extends intersecting the front control slotted link (18) in such a manner that the bearing pin (16) of the front deployment lever (14) is held supported within the blocking section of the lifting slotted link (22) by the control slotted link (18) as long as the roof part is being transferred to the ventilation position thereof.

## Revendications

1. Système de toit d'un véhicule automobile, comportant une ouverture de toit (A) fixée au véhicule ainsi qu'une partie de toit (2) montée de manière mobile pour fermer et ouvrir l'ouverture de toit (A), ainsi qu'au moins un mécanisme de levage et de guidage pour déplacer la partie de toit (2) entre une position de fermeture et au moins une position d'ouverture, le mécanisme comprenant un chariot de commande (8) déplaçable par le biais d'un système d'entraînement dans un arrangement de rail de guidage (5) fixé au toit, et comprenant un levier de levage avant et un levier de levage arrière (14, 15) sur lesquels la partie de toit (2) est montée et qui sont couplés au chariot de commande (8), dans lequel le levier de levage avant (14) est blocable par rapport au levier de levage arrière (15) dans la direction longitudinale de l'arrangement de rail de guidage (5) pour une position de ventilation de la partie de toit (2), dans lequel le chariot de commande (8) comprend un dispositif coulissant de commande avant (18) et un tourillon de palier (16) du levier de levage avant (14) est guidé dedans, dans lequel le tourillon de palier (16) passe à travers le dispositif coulissant de commande avant (18) dans un dispositif coulissant d'enlevage (22) fixé au toit, s'étendant dans un plan parallèle au dispositif coulissant de commande avant (18) et orienté au moins par passages croisant par rapport au dispositif coulissant de commande avant (18),
**caractérisé en ce que**
le dispositif coulissant d'enlevage (22) est moulé d'une seule pièce sur un prolongement de guidage (9) définissant une section de guidage courbée et étant agencé sur une zone d'extrémité frontale avant de l'arrangement de rail de guidage (5), et **en ce que** le dispositif coulissant d'enlevage (22) comprend une section de blocage s'étendant au moins largement dans la direction verticale et passant en croisement par rapport au dispositif coulissant de commande avant (18) de telle manière que le tourillon de palier (16) du levier de levage avant (14) est retenu appuyé dans la section de blocage du dispositif coulissant d'enlevage (22) par le dispositif coulissant de commande avant (18), pendant que la partie de toit est transférée dans sa position de ventilation.
